# FASCICULE DE BREVET EUROPEEN

(11) **EP 0 573 890 B1**
(45) Date de publication et mention de la délivrance du brevet: **03.01.1996**
(21) Numéro de dépôt: 93108860.3
(22) Date de dépôt: 02.06.1993
(51) Int. Cl.: B60C 11/03

(54) **Train de pneumatiques à sculptures directionnelles**
Reifensatz mit orientiertem Profil
Set of tyres with directional pattern

(30) Priorité: 11.06.1992 FR 9207241
(43) Date de publication de la demande: 15.12.1993
(73) Titulaire: COMPAGNIE GENERALE DES ETABLISSEMENTS MICHELIN - MICHELIN & CIE, F-63040 Clermont-Ferrand Cédex (FR)
(72) Inventeur: Favre, François, F-63119 Chateaugay (FR); Martin, Didier, F-63400 Chamalières (FR)
(74) Mandataire: Devaux, Edmond-Yves

(56) Documents cités:
- EP-A- 0 194 069
- EP-A- 0 196 161
- DE-U- 9 005 028
- PATENT ABSTRACTS OF JAPAN vol. 8, no. 191 (M-322)(1628) 4 Septembre 1984 & JP-A-59 81 203 (YOKOHAMA GOMU)

## Description

L'invention concerne un train de pneumatiques destiné à équiper un véhicule, et plus particulièrement des pneumatiques munis de bandes de roulement dont les sculptures sont directionnelles, c'est-à-dire des sculptures qui, par leurs dessins, sont liées au sens de rotation des pneumatiques.

Il faut entendre par train de pneumatiques l'ensemble des pneumatiques nécessaires à l'équipement complet du véhicule.

Les sculptures directionnelles sont connues de longue date et utilisées depuis longtemps pour les pneumatiques agricoles ou les pneumatiques utilisés sur chantiers ou dans les mines. Ce principe de sculpture est depuis quelques années appliqué avec un certain succès dans les pneumatiques destinés à rouler à grande vitesse, les caractéristiques combinées des rainures et des nervures étant choisies pour obtenir le meilleur compromis possible entre les propriétés d'adhérence sur les différents sols rencontrés par le pneumatique, les propriétés d'usure et d'endurance, les propriétés de résistance au roulement et de tenue à la vitesse, les propriétés de comportement du véhicule en ligne droite et en virages, et les propriétés relatives au bruit.

Il est connu qu'une sculpture directionnelle, dont les rainures et nervures sont fortement inclinées par rapport à la direction circonférentielle du pneumatique avec les extrémités situées au centre de la bande de roulement pénétrant en premier dans la zone de contact entre le pneumatique et le sol garantit une faible génération de bruit. Tel est l'enseignement partiel du document FR 2 637 547 ou de la demande EP 0 402 303, montrant des sculptures dites en "V" ou à chevrons. S'il est effectivement vrai que les sculptures décrites génèrent une intensité sonore ou puissance acoustique de moindre valeur à l'avant de l'ellipse de contact pneumatique - sol lorsque le sens de rotation préconisé est respecté, il s'agit du bruit extérieur, c'est-à-dire du bruit perçu à l'extérieur du véhicule. Ce bruit extérieur est mesuré soit près du pneumatique, à l'avant ou à l'arrière de l'ellipse de contact pneumatique-sol, soit "en bord de piste" sur laquelle roule le véhicule d'essai.

Il existe aussi les bruits dits intérieurs qui sont beaucoup plus gênants pour les occupants du véhicule, et le sont d'autant plus que la sculpture des pneumatiques est constituée d'éléments rigoureusement identiques sur la circonférence. La technique bien connue dite "à pas variable", les longueurs circonférentielles des éléments de sculpture étant différentes et déterminées de manière à ce que l'énergie sonore se répartisse sur un large spectre de fréquence afin d'éviter les résonances, permet une atténuation notable des bruits intérieurs. Ceux-ci étant particulièrement influencés par la taille du pneumatique, c'est-à-dire par le rapport de la hauteur du pneumatique sur la largeur axiale maximale dudit pneumatique, par la vitesse de roulage du véhicule équipé, par l'emplacement des rainures transversales, ils doivent être encore réduits.

Les études réalisées par le demandeur sur les sources des bruits émis par le roulement des pneumatiques et sur la manière dont ces bruits sont transférés aux occupants d'un véhicule ont permis d'obtenir une amélioration sans que le niveau de la puissance acoustique émise à l'extérieur soit accru.

Selon l'invention, un train de pneumatiques composé d'au moins quatre pneumatiques comprenant chacun une bande de roulement munie d'une sculpture directionnelle ayant au moins des rainures transversales allant d'un bord à l'autre de la bande de roulement et dont les tracés sont semblables à la forme d'un "V", est caractérisé en ce que les pneumatiques équipant l'(les) essieu(x) arrière du véhicule ont un sens de rotation tel que les sommets du "V" pénètrent les premiers dans la zone de contact entre le pneumatique et le sol, les pneumatiques équipant l'(les) essieu(x) avant du véhicule ayant un sens de rotation contaire, les sommets du "V" rentrant dans l'ellipse de contact pneumatique-sol après les extrémités axialement extérieures des branches du "V". Dans cette définition la forme en V est entendue dans un sens large comme il est expliqué ci-après.

Les tracés de rainures transversales sont sans aucun doute semblables à la forme de "V" s'ils ont ladite forme, c'est-à-dire si les rainures transversales comprennent deux branches inclinées par rapport à la direction circonférentielle du pneumatique du même angle, situées de part et d'autre du plan équatorial et symétriques par rapport audit plan, le sommet du "V", c'est-à-dire l'intersection des deux branches, étant alors situé dans le même plan.

Les tracés de rainures seront aussi considérés comme semblables à la forme d'un "V" si les deux branches sont continues ou discontinues, c'est-à-dire formées de portions non obligatoirement dans le prolongement l'une de l'autre ; il en sera de même si les deux branches ne sont pas symétriques par rapport au plan équatorial, les deux branches pouvant avoir des inclinaisons différentes en valeur absolue. Il en sera de même si le sommet ou pointe du "V" n'est pas dans le plan équatorial mais dans un plan parallèle audit plan et axialement désaxé.

La forme du "V" sera aussi respectée, si le sommet du "V" est formé d'un angle aigu ou obtus, si le sommet est arrondi, s'il est tronqué de manière à ce que les deux extrémités axialement intérieures des branches inclinées sont réunies par une portion de rainure axiale. Seront aussi considérés comme semblables à la forme d'un "V", les tracés présentant deux branches inclinées dont les extrémités axialement intérieures ne se joignent pas, qu'elles soient décalées circonférentiellement, axialement, ou les deux simultanément. Il en sera de même pour des tracés à deux branches inclinées, prolongées axialement à l'intérieur par des portions de rainures axiales ne se joignant pas.

De manière préférentielle, les sculptures directionnelles concernées à rainures transversales en "V" comprennent aussi des rainures circonférentielles, qui, développées, sont rectilignes ou légèrement en zigzag.

L'invention sera mieux comprise à l'aide du dessin annexé à la description, illustrant un exemple non limitatif d'exécution, dessin sur lequel :

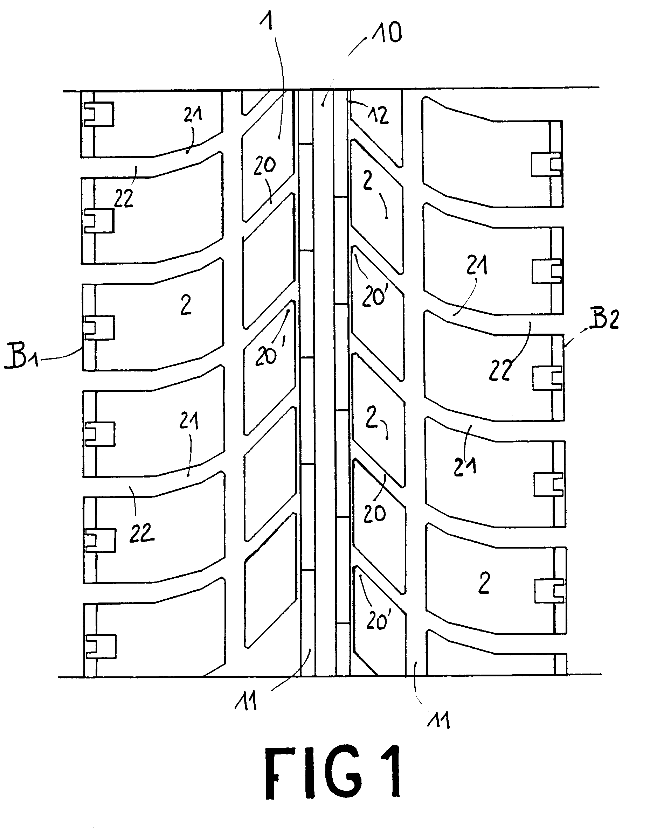

- la figure 1 représente le dessin d'une bande de roulement munie d'une sculpture dite en "V",
- la figure 2 représente un pneumatique muni d'une bande de roulement tel que montré sur la figure 1 roulant dans la direction dite "pointe en Avant",
- la figure 3 représente vue d'en haut les quatre pneumatiques équipant un véhicule de tourisme.

La bande de roulement (1) d'un pneumatique (P) est pourvue d'une sculpture comprenant une rainure circonférentielle (10) située au milieu de la bande de roulement (1) et deux larges rainures circonférentielles (11) latérales. Entre les rainures (11) et la rainure (10) existent aussi deux rainures circonférentielles (12) de faible largeur. Les rainures (10) et (11) divisent la largeur de bande de roulement (1) sensiblement en quatre parties sensiblement égales, et forment des blocs (2) avec des rainures transversales dites en "V", rainures ainsi appelées parce que l'examen de leurs tracés sur le pneumatique, en allant du bord (B1) de la bande de roulement au bord (B2) rappelle la géométrie de la lettre V. Ces rainures sont formées de portions (20) fortement inclinées par rapport à la direction circonférentielle du pneumatique (P), prolongées de part et d'autre par des portions (21) inclinées par rapport à ladite direction circonférentielle mais avec un angle plus faible, portions (21) de la sculpture elles-même complétées par des portions de rainures (22) perpendiculaires à la direction circonférentielle. Les rainures transversales et les rainures circonférentielles délimitent ainsi des blocs (2).

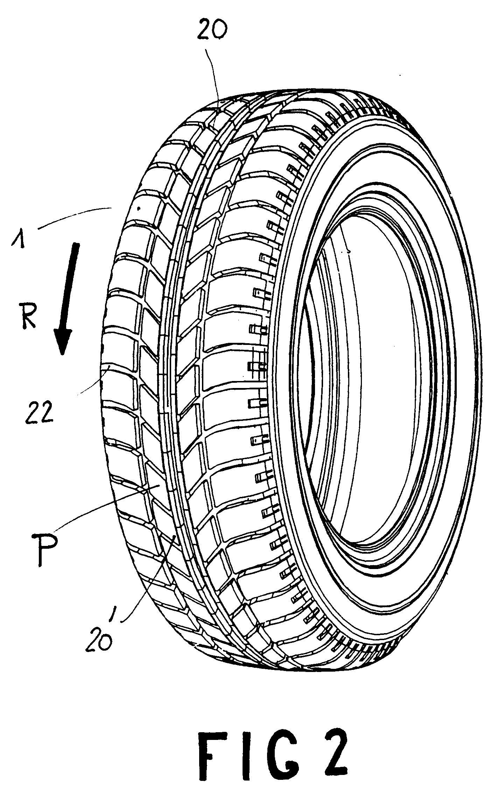

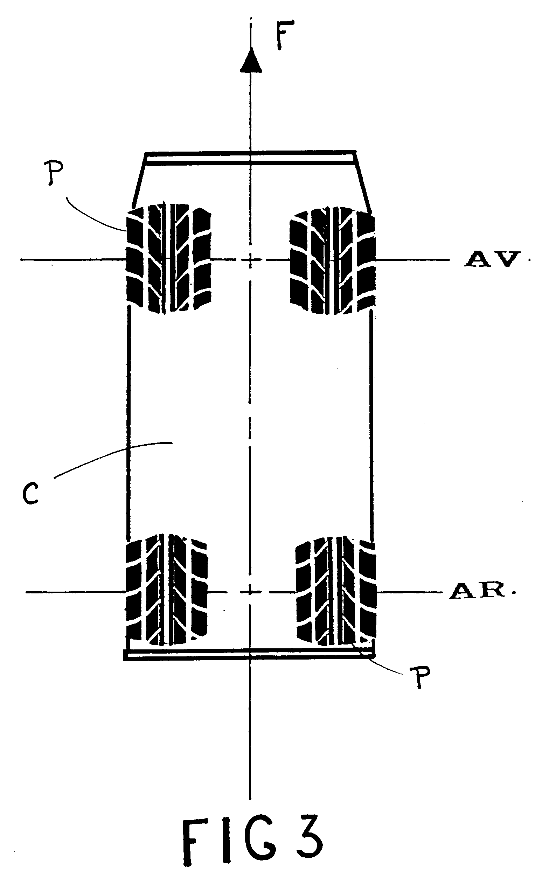

Sur la figure 2 est représenté en perspective le pneumatique (P) avec une bande de roulement (1) identique à la bande de roulement décrite précédemment. Ce pneumatique (P) est animé d'un mouvement de rotation dans le sens de la flèche (R) de sorte que les sommets axialement intérieurs (20') des rainures transversales (20) pénètrent les premiers dans la zone de contact entre le pneumatique et le sol. Si le pneumatique (P) roule en sens inverse, ce sont les portions latérales (22) qui pénètrent les premières dans ladite zone. La figure 3 représente schématiquement un véhicule de tourisme (C) équipé de quatre pneumatiques (P) dont les bandes de roulement (1) sont identiques à celle décrite ci-dessus. Le sens de la marche avant du véhicule est indiqué par la flèche F. Conformément à l'invention, les pneumatiques (P) équipant l'essieu avant (AV) du véhicule (C) sont animés d'un mouvement de rotation tel que les sommets (20') centraux des rainures transversales (20) pénètrent dans la zone de contact du pneumatique après les portions latérales (22). A l'inverse, les pneumatiques (P) équipant l'essieu arrière (AR) du véhicule (C) sont animés d'un mouvement de rotation tel que les sommets (20') centraux des rainures transversales (20) pénètrent dans la zone de contact entre le pneumatique et le sol avant les portions latérales (22) et (21).

Si l'on considère que les pneumatiques de l'essieu avant ci-dessus roulent "pointe en arrière" et les pneumatiques de l'essieu arrière "pointe en avant", l'équipement ainsi décrit permet une diminution de la puissance acoustique de l'ordre de 50 % par rapport à un équipement comprenant sur l'essieu avant des pneumatiques dont le sens de rotation est dit "pointe en avant, et sur l'essieu arrière des pneumatiques dont le sens est aussi "pointe en avant". Ce gain, mesuré objectivement et correspondant à la zone fréquentielle relative à l'harmonique 1 (prise en compte des seuls blocs de sculpture), est appréciable pour les occupants du véhicule puisque très significatif dans le cas d'un test subjectif, test où le seul juge est l'homme.

## Revendications

1. Train ou équipement de pneumatiques (P) pour véhicule routier, comprenant chacun une bande de roulement (1) munie d'une sculpture directionnelle ayant au moins des rainures transversales (20, 21, 22) dont les tracés sont, semblables à la forme d'un "V", caractérisé en ce que les pneumatiques (P) équipant l'(les) essieu(x) arrière dudit véhicule ont un sens de rotation (R), tel que les sommets (20') des rainures en "V" pénètrent les premiers dans la zone de contact entre le pneumatique et le sol, alors que les pneumatiques (P) équipant l'(les) essieu(x) avant du véhicule ont un sens de rotation (R) contraire, les sommets (20') des rainures en "V" rentrant dans la zone de contact pneumatique-sol après les extrémités axialement extérieures desdites rainures, les sens de rotation (R) des pneumatiques (P) étant considérés pour la marche avant du véhicule.

2. Train de pneumatiques selon la revendication 1, caractérisé en ce que les bandes de roulement (1) des pneumatiques (P) ont des sculptures directionnelles pourvues de rainures circonférentielles (10) (11).

## Claims

1. A set or equipment of tyres (P) for highway vehicles, each comprising a tread (1) provided with a directional tread pattern having at least transverse grooves (20, 21, 22) the traces of which are similar to the shape of a "V", characterised in that the tyres (P) equipping the rear axle or axles of said vehicle have a direction of rotation (R) such that the vertices (20') of the "V" grooves penetrate first into the region of contact between the tyre and the ground, while the tyres (P) equipping the front axle or axles of the vehicle have the opposite direction of rotation (R), the vertices (20') of the "V" grooves entering into the tyre/ground contact region after the axially outer ends of said grooves, the directions of rotation (R) of the tyres (P) being considered with respect to the forward travel of the vehicle.

2. A set of tyres according to Claim 1, characterised in that the treads (1) of the tyres (P) have directional tread patterns provided with circumferential grooves (10, 11).

## Patentansprüche

1. Satz oder Ausrüstung von Reifen (P) für ein Straßenfahrzeug, mit jeweils einer Lauffläche (1), die mit einem richtungsgebundenen Profil versehen ist, das mindestens querverlaufende Rillen (20, 21, 22) aufweist, deren Verläufe der Form eines "V" gleichen bzw. ähneln, dadurch **gekennzeichnet**, daß die Reifen (P), die die Hinterachse(n) des genannten Fahrzeugs ausstatten, eine solche Drehrichtung (R) aufweisen, daß die Scheitel (20') der V-Rillen als erste in den Berührungsbereich zwischen den Reifen und dem Boden einlaufen, während die Reifen (P), die die Hinterachse(n) des Fahrzeugs ausstatten, eine entgegengesetzte Drehrichtung (R) aufweisen, wobei die Scheitel (20') der V-Rillen in den Berührungsbereich von Reifen-Boden nach den axial außenliegenden Enden der genannten Rillen einlaufen, wobei die Drehrichtung (R) der Reifen (P) für die Vorwärtsfahrt des Fahrzeugs berücksichtigt wurde.

2. Reifensatz nach Anspruch 1, dadurch **gekennzeichnet**, daß die Laufflächen (1) der Reifen (P) richtungsgebundene Profile aufweisen, die mit Umfangsrillen (10) (11) versehen sind.
